# EUROPÄISCHE PATENTSCHRIFT

(11) **EP 3 665 063 B1**
(45) Veröffentlichungstag und Bekanntmachung des Hinweises auf die Patenterteilung: **26.01.2022**
(21) Anmeldenummer: 18753356.7
(22) Anmeldetag: 06.08.2018
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 09.08.2017 DE 102017213895
(43) Veröffentlichungstag der Anmeldung: 17.06.2020
(73) Patentinhaber: thyssenkrupp Presta AG, 9492 Eschen (LI); thyssenkrupp AG, 45143 Essen (DE)
(72) Erfinder: SCHNITZER, Hieronymus, 9487 Gamprin (LI); PALTINISANU, Ciprian, 9492 Eschen (LI); ANCELIN, Matthias, 8864 Reichenberg (CH)
(74) Vertreter: thyssenkrupp Intellectual Property GmbH
(86) Internationale Anmeldenummer: PCT/EP2018/071273
(87) Internationale Veröffentlichungsnummer: WO 2019/030175

(56) Entgegenhaltungen:
- WO-A1-2009/121386
- WO-A1-2014/183819
- US-A1- 2007 194 563

## Beschreibung

### Stand der Technik

Die Erfindung betrifft eine Lenksäule für ein Kraftfahrzeug, umfassend einen ersten Mantel, in dem eine Lenkspindel um eine Achse drehbar gelagert ist, wobei der erste Mantel und ein zweiter Mantel in Richtung der Achse ineinander teleskopierbar angeordnet sind, wobei der zweite Mantel mit einer Karosserie des Kraftfahrzeugs verbindbar ist, wobei die Mäntel über eine Energieabsorptionseinrichtung miteinander gekoppelt sind, die zumindest zwei in Richtung der Achse hintereinander angeordnete Deformationsabschnitte und eine Koppelvorrichtung aufweist, wobei über die Koppelvorrichtung zumindest einer der Deformationsabschnitte zwischen den Mänteln einkoppelbar oder auskoppelbar ist, welcher in eingekoppeltem Zustand bei einer relativen Verschiebung des ersten Mantels gegenüber dem zweiten Mantel plastisch verformbar ist, wobei mindestens zwei Deformationsabschnitte an einem einstückigen Energieabsorptionselement ausgebildet sind, wobei die Koppelvorrichtung zumindest einen Aktuator aufweist mit einem bewegbaren Koppelelement, welches in Wirkeingriff bringbar ist zur Ein- oder Auskopplung eines Deformationsabschnitts zwischen den Mänteln.

Der erste Mantel ist Teil einer Stelleinheit, welche die Lenkspindel, an deren bezüglich der Fahrtrichtung hinteren, dem Fahrer zugewandten Ende ein Lenkrad angebracht ist, um eine Achse, die auch als Längsachse bezeichnet wird, drehbar lagert. Der zweite Mantel kann mittels einer Trageinheit direkt oder indirekt an der Karosserie des Kraftfahrzeugs befestigt. In einer Bauform der Teleskopanordnung kann der erste Mantel in den zweiten Mantel eintauchen, und wird dann auch als Innenmantel oder inneres Mantelrohr bezeichnet, wobei der zweite Mantel den Außenmantel oder die äußere Manteleinheit bildet.

Zur Anpassung der Lenkradposition an die Sitzposition des Fahrers eines Kraftfahrzeugs kann das Lenkrad durch eine teleskopierende Längenverstellung der Mäntel in Richtung der Lenksäulen-Längsachse in Längsrichtung im Fahrzeuginnenraum positioniert werden.

Für die Längenverstellung ist eine Verstelleinrichtung vorgesehen. Die Verstelleinrichtung kann eine manuelle Spanneinrichtung aufweisen, auch als Feststelleinrichtung bezeichnet, die auf die Mäntel wirkt. In geöffnetem Zustand der Spanneinrichtung - auch gleichbedeutend als Freigabestellung oder Löseposition bezeichnet - ist eine manuelle teleskopierende Verschiebung der Mäntel zur Einstellung der Lenkradposition möglich, während in geschlossenem Zustand - Fixierstellung oder Feststellposition genannt - die Mäntel miteinander verspannt und im normalen Fahrbetrieb die Lenkradposition unter den zu erwartenden mechanischen Beanspruchungen in Achsrichtung relativ zueinander fixiert sind. Die Fixierstellung kann beispielsweise durch manuelle Betätigung eines Spannhebels eingestellt werden. Alternativ zur manuellen Spanneinrichtung kann eine motorische Verstelleinrichtung realisiert sein, beispielsweise durch einen Spindeltrieb mit einer in eine Spindelmutter eingreifenden Gewindespindel, die relativ zu der Spindelmutter motorisch drehend antreibbar ist, wobei sich die Gewindespindel an dem einen Mantel und die Spindelmutter an dem anderen Mantel in Achsrichtung abstützt. Durch relative Drehung von Gewindespindel und Spindelmutter ist eine motorische Positionierung der Mäntel in Achsrichtung möglich, und im Stillstand erfolgt eine relative Fixierung durch die Selbsthemmung des Spindeltriebs.

Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, zusätzlich zur Verstelleinrichtung zwischen den Mänteln eine Energieabsorptionseinrichtung einzukoppeln, auch als Crash-System bezeichnet. Wird im Crashfall durch einen auf das Lenkrad auftreffenden Körper eine hohe Kraft auf das Lenkrad ausgeübt wird, die einen vorgegebenen Grenzwert überschreitet, werden die beiden Mäntel auch in Fixierposition der Verstelleinrichtung relativ zueinander in Achsrichtung zusammengeschoben, wobei mindestens ein Deformationsabschnitt der Energieabsorptionseinrichtung plastisch verformt wird. Dabei wird die in die Mäntel in Längsrichtung eingeleitete kinetische Energie absorbiert, d.h. in Verformungsarbeit umgesetzt, so dass der auf das Lenkrad auftreffende Körper kontrolliert abgebremst wird und die Verletzungsgefahr verringert wird.

Es ist im Stand der Technik beispielsweise aus der US 2015/0375773 A1 bekannt, die Bremswirkung der Energieabsorptionseinrichtung steuerbar zu gestalten, um im Crashfall zu berücksichtigen, ob der Fahrer angegurtet ist oder nicht, oder eine Anpassung an Parameter wie Fahrzeuggeschwindigkeit, Fahrergewicht, Abstand vom Lenkrad und dergleichen vornehmen zu können. Im Einzelnen sollen hierzu mindestens zwei Deformationsabschnitte vorgesehen werden, die bei Bedarf dadurch aktiviert werden können, dass sie durch eine Koppelvorrichtung zwischen den Mänteln eingekoppelt werden. Durch diese schaltbare Ausgestaltung der Koppelvorrichtung kann zumindest eines der mindestens zwei Deformationselemente eingekoppelt oder ausgekoppelt werden. Auf diese Weise kann eine schaltbare, individuell an den jeweiligen Bedarfsfall angepasste Energieabsorptionscharakteristik, d.h. ein Crashniveau bzw. Crashlevel realisiert werden.

Insbesondere bei gattungsgemäßen Lenksäulen mit Verstelleinrichtung und schaltbarem Crashsystem mit zwei Crashniveaus steht nur ein relativ enger Bauraum für die Energieabsorptionsvorrichtung zur Verfügung. Diesbezüglich hat das aus der genannten US 2015/0375773 A1 bekannte Crashsystem den Vorteil, dass die zwei Deformationsabschnitte in Achsrichtung hintereinander angeordnet sind, so dass eine in Achsrichtung langgestreckte, schlanke Bauform realisierbar ist. Dadurch, dass die Deformationsabschnitte als separate Biegelemente ausgebildet sind, die erst in dem Crashsystem durch Verbindungsmittel miteinander verbunden werden, kann der erforderliche Platzbedarf jedoch nicht weiter verringert werden. Außerdem ist nachteilig, dass die Fertigung und die Montage mehrerer Einzelkomponenten aufwendig sind.

Eine Lenksäule der eingangs genannten Art ist aus der US 2007/194653 A1 oder der WO 2009/121386 A1 bekannt. Bei diesen bekannten Ausführungen kann der Wirkeingriff des Mitnehmers in das Energieabsorptionselement zur Vorgabe der Energieabsorption nachteilig sein.

Angesichts der vorangehend erläuterten Problematik ist es eine Aufgabe der vorliegenden Erfindung, bei einer Lenksäule der eingangs genannten Art eine verbesserte Anpassung der Energieabsorption zu ermöglichen.

### Darstellung der Erfindung

Diese Aufgabe wird gelöst durch eine Lenksäule mit den Merkmalen des Anspruchs 1. Vorteilhafte Weiterbildungen ergeben sich aus den Unteransprüchen.

Erfindungsgemäß wird eine für Lenksäule der eingangs genannten Art vorgeschlagen, dass die Koppelvorrichtung mit einem Eingriffsteil zusammenwirkt, das ein erstes Mitnehmerelement aufweist, welches mit dem ersten Deformationselement in Wirkeingriff bringbar ist, wobei das Eingriffsteil mindestens ein Verbindungsteil aufweist, das ein zweites Mitnehmerelement aufweist, welches mit dem zweiten Deformationselement in Wirkeingriff bringbar ist, wobei das Eingriffsteil und das Verbindungsteil über die Koppelvorrichtung voneinander trennbar verbunden sind.

Bei der Energieabsorptionseinrichtung sind die Deformationsabschnitte in Achsrichtung hintereinander angeordnet, so dass eine vorteilhaft schlanke, sich entlang der Achse erstreckende Anordnung realisiert wird, ähnlich der aus dem nächstliegenden bekannten Stand der Technik gemäß der oben genannten US 2015/0375773 A1. Darüber hinaus können erfindungsgemäß beide Deformationsabschnitte einer zweistufig schaltbaren Energieabsorptionseinrichtung an einem einzigen Energieabsorptionselement zur Verfügung gestellt werden. Anstelle von zwei einzelnen Energieabsorptionselementen mit jeweils einem Deformationsabschnitt, die im Stand der Technik einzeln hergestellt und miteinander verbunden montiert werden müssen, ist bei der Erfindung lediglich ein einzelnes Energieabsorptionselement erforderlich, wodurch der Fertigungs- und Montageaufwand signifikant verringert wird. Beispielsweise ist der Herstellungsaufwand eines bevorzugt aus Stahl gefertigten, als Biegestreifen mit erfindungsgemäß zwei Biegeabschnitten als Stanz-Press-Teil ausgebildeten Energieabsorptionselements vergleichbar mit dem eines der zwei im Stand der Technik erforderlichen Biegeelemente, so dass die Fertigung entsprechend rationeller ist. Hinzu kommt die einfachere Handhabung und Montage nur eines Bauteils in der Lenksäule.

Ein weiterer Vorteil des einstückigen Energieabsorptionselements ist, dass es bei gleichen Energieabsorptionseigenschaften mit geringerem Materialbedarf und damit leichter ausgebildet sein kann als zwei separate, nachträglich miteinander verbundene einzelne Energieabsorptionselemente. Die dadurch erreichbare Gewichts- und Materialersparnis ist im Hinblick auf Leichtbau und Energieersparnis vorteilhaft.

Die Deformationsabschnitte können einstückig über einen in Achsrichtung langgestreckten Verbindungsabschnitt miteinander verbunden sein, der Befestigungsmittel aufweist. Die Befestigungsmittel sind ausgestaltet zur Verbindung des Energieabsorptionselements mit einem der Mäntel, beispielsweise dem ersten Mantel, der beispielsweise einen Innenmantel darstellen kann. Die Befestigungsmittel können ein Formschlusselement umfassen, wie beispielsweise einen quer zur Achsrichtung vorstehenden Vorsprung, oder einen eingeformten Rücksprung, welches zur Erzeugung eines in Achsrichtung wirksamen Formschlusses in Eingriff gebracht werden kann mit einem korrespondierenden Gegen-Formschlusselement am Mantel, der entsprechend eine Einformung oder einen Vorsprung aufweisen kann. Ein derartiges Formschlusselement kann ebenfalls einstückig mit dem Energieabsorptionselement ausgebildet sein, was einem geringen Fertigungsaufwand zugutekommt.

Die Achsrichtung entspricht der Richtung der Achse bzw. der Richtung der Längsachse, wobei die Begriffe vollständig synonym zueinander verwendet werden können.

Alternativ oder zusätzlich kann die Befestigung über ein Befestigungselement wie einen Niet, einen Bolzen oder dergleichen erfolgen. Eine alternative oder zusätzliche Fixierung über eine Stoffschlussverbindung wie eine Verschweißung oder dergleichen ist ebenfalls denkbar.

Ein Deformationsabschnitt kann bevorzugt jeweils einen Koppelabschnitt aufweisen zur Verbindung mit einem Mantel. Davon ausgehend, dass das Energieabsorptionselement über Befestigungsmittel, beispielsweise wie vorangehend beschrieben im Verbindungsabschnitt, mit den ersten Mantel verbunden ist, beispielsweise einem Innenmantel, erfolgt über den Koppelabschnitt jeweils die Fixierung eines Deformationsabschnitts an dem zweiten Mantel, beispielsweise einem Außenmantel oder einer äußeren Manteleinheit, so dass über den Koppelabschnitt im Crashfall die Energie in den Deformationsabschnitt eingeleitet werden kann. Ein Koppelabschnitt kann ein Formschlusselement aufweisen, wie eine Öffnung, oder einen Vorsprung, und direkt oder auch über zusätzliche Zwischen- oder Übertragungselemente mittelbar mit dem zweiten Mantel verbunden werden. Insbesondere kann eine Koppelvorrichtung mit einem Eingriffsteil vorgesehen sein, welches mit einem oder beiden Koppelabschnitten gekoppelt oder koppelbar ist, und an einem Mantel in Achsrichtung abstützbar ist. Die Koppelvorrichtung ist für zumindest einen Koppelabschnitt schaltbar ausgestaltet, um mindestens einen Deformationsabschnitt mittels der Koppelvorrichtung zwischen den Mänteln ein- oder auszukoppeln. Der andere Koppelabschnitt kann über ein festes Eingriffsteil den zugehörigen Deformationsabschnitt immer zwischen den Mänteln eingekoppelt sein, oder auch schaltbar ausgebildet sein, so dass wahlweise der eine oder der andere oder beide Deformationsabschnitte eingekoppelt werden können.

Eine bevorzugte Ausführungsform sieht vor, dass das Energieabsorptionselement als in Achsrichtung langgestreckter Biegestreifen ausgebildet ist, der einen Verbindungsabschnitt aufweist, an dessen in Achsrichtung entgegengesetzten Endbereichen zwei U-förmige Biegeabschnitte ausgebildet sind, bei denen jeweils ein freier Schenkel über eine Umbiegung mit dem Verbindungsabschnitt verbunden ist. Dadurch wird ein einstückiger Doppel-Biegestreifen ausgebildet, bei dem der Verbindungsabschnitt einen gemeinsamen ersten Schenkel beider Biegeabschnitte bildet, die an den in Achsrichtung gegenüberliegenden, äußeren Enden des Verbindungsabschnitts angeordnet sind. Der durch den Verbindungsabschnitt realisierte gemeinsame Schenkel der beiden Biegeabschnitte ermöglicht in vorteilhafter Weise eine Material- und Gewichtsersparnis gegenüber den im Stand der Technik separaten Biegestreifen. An den beiden nach außen in entgegengesetzte Achsrichtungen weisenden Enden des Verbindungsabschnitts ist der Biegestreifen jeweils um etwa 180° umgebogen, so dass die sich an die Umbiegungen anschließenden freien Schenkel in Achsrichtung gegeneinander weisen. Die Umbiegungen liegen bevorzugt parallel zu einer Ebene auf derselben Seite des Verbindungsabschnitts, so dass die freien Schenkel ich Achsrichtung miteinander fluchten. Dadurch wird eine flache, kompakte Bauform des Energieabsorptionselements ermöglicht.

In dem Bereich des freien Endes eines freien Schenkels kann jeweils ein Koppelabschnitt ausgebildet sein. Vorzugsweise ist ein derartiger Koppelabschnitt einstückig mit dem Biegestreifen geformt. Beispielsweise kann zur Einleitung einer Zugkraft in den Schenkel ein Koppelabschnitt hakenförmig ausgebildet sein oder eine Koppelöffnung quer zur Achsrichtung aufweisen, und zur Einleitung einer Druckkraft eine gegen die Achsrichtung gerichtete Stützfläche oder dergleichen auf Druck belastbares Kraftübertragungselement.

Erfindungsgemäß ist vorgesehen, dass die schaltbare Koppelvorrichtung zumindest einen - bevorzugt pyroelektrischen - Aktuator aufweist mit einem bewegbaren Koppelelement, welches in Wirkeingriff bringbar ist zur Ein- oder Auskopplung eines Deformationsabschnitts zwischen den Mänteln, d.h. zwischen dem ersten Mantel und dem zweiten Mantel. Das Koppelelement kann beispielsweise ein Koppelstift oder -bolzen sein, der in eingekoppelten Zustand Verbindung zwischen einem Koppelabschnitt eines Deformationselements, beispielsweise eines Biegeabschnitts, und einem Mantel, oder einem mit dem Mantel in Achsrichtung unverschiebbar angreifenden Zwischen- oder Übertragungselements, beispielsweise einem Eingriffsteil. Bei Aktivierung der Koppelvorrichtung kann das Koppelelement aus der Wirkverbindung mit dem Koppelabschnitt entfernt werden, wodurch das Deformationselement aus dem Kraftfluss zwischen den Mänteln ausgekoppelt wird, und das betreffende Deformationselement im Crashfall abgeschaltet, d.h. deaktiviert ist. Dadurch kann ein niedrigeres Crashniveau mit geringerer Energieabsorption eingeschaltet werden. Alternativ ist es denkbar, dass bei Aktivierung der Koppelvorrichtung das Koppelelement in Eingriff mit dem Koppelabschnitt gebracht wird, um das Deformationselement zur Aktivierung eines höheren Crashniveaus einzuschalten. Der Einsatz eines pyroelektrischen Aktuators, kurz als Pyroswitch bezeichnet, hat den Vorteil einer schnellen Betätigung bei ausreichend hoher Betätigungskraft.

Weiterhin sieht die Erfindung vor, dass die Koppelvorrichtung mit einem Eingriffsteil zusammenwirkt, das ein erstes Mitnehmerelement aufweist, welches mit dem ersten Deformationselement in Wirkeingriff bringbar ist, wobei das Eingriffsteil mindestens ein Verbindungsteil aufweist, das ein zweites Mitnehmerelement aufweist, welches mit dem zweiten Deformationselement in Wirkeingriff bringbar ist, wobei das Eingriffsteil und das Verbindungsteil über die Koppelvorrichtung voneinander trennbar verbunden sind. Das Eingriffsteil dient als Zwischenoder Übertragungselement zwischen einem der Mäntel, beispielsweise dem Außenmantel, an dem es sich im Crashfall in Achsrichtung abstützen kann, zur Kraftübertragung in das Energieabsorptionselement, an dem es über die Mitnehmerelemente in die Koppelabschnitte eingreifen kann.

Das Eingriffsteil ist separat von dem Energieabsorptionselement ausgebildet. Im Crashfall sorgt es einerseits über die Verbindung mit dem Mantel und andererseits über die Verbindung mit einem oder beiden Deformationsabschnitten für die Energieübertragung von der Manteleinheit auf die Energieabsorptionseinrichtung. Es zeichnet sich dadurch aus, dass es quer zur Achs- bzw. Längsrichtung teilbar ausgestaltet ist, so dass es in mindestens zwei Teilelemente getrennt werden kann, die in Längsrichtung entkoppelt und unabhängig voneinander bewegbar sind. Dies wird dadurch realisiert, dass das mindestens eine Verbindungsteil durch Entkoppeln der Koppelvorrichtung von dem Eingriffsteil gelöst, d.h. in Achsrichtung abgekoppelt werden kann.

Das Eingriffsteil ist in Fixierstellung bezüglich der Längsrichtung, d.h. in Achsrichtung unverschiebbar mit dem einen Mantel verbunden, beispielsweise über korrespondierende, ineinander eingreifende Formschlusselemente, wie eine Verzahnung oder dergleichen eines Arretierelements, wie im Folgenden noch erläutert wird. Das Verbindungsteil bildet ein Teilelement, welches wahlweise durch die gekoppelte Koppelvorrichtung mit dem Eingriffsteil verbunden ist, wodurch der verbundene bzw. gekoppelte Zustand realisiert wird, oder im getrennten bzw. entkoppelten Zustand durch die dann entkoppelte Koppelvorrichtung von dem Eingriffsteil gelöst ist. Im gekoppelten Zustand wird das mindestens eine Verbindungsteil im Crashfall mit diesem zusammen in Längsrichtung relativ zum Innenmantel, der auch als inneres Mantelrohr bezeichnet wird, bewegt. Im getrennten, entkoppelten Zustand hat das Verbindungsteil mit dem Eingriffsteil keine mechanische Verbindung über die Koppelvorrichtung, so dass im Crashfall nur das Eingriffsteil relativ zum inneren Mantelrohr bewegt wird, aber das Verbindungsteil relativ zum inneren Mantelrohr ruht.

Dadurch, dass das Eingriffsteil über ein erstes Mitnehmerelement mit dem Kopplungsabschnitt des ersten Deformationselements wirkverbunden ist, und das Verbindungsteil ein zweites Mitnehmerelement aufweist, welches mit dem Kopplungsabschnitt des zweiten Deformationselements wirkverbunden ist, werden im verbundenen Zustand, in dem das Verbindungsteil durch die Koppelvorrichtung mit dem Eingriffsteil verbunden ist und im Crashfall gemeinsam mit diesem relativ zum inneren Mantelrohr bewegt wird, im Crashfall das erste und das zweite Deformationselement gemeinsam verformt. Dadurch wird ein hohes Crashniveau mit hoher Energieabsorption realisiert. Im getrennten Zustand wird im Crashfall nur das Eingriffsteil relativ zum inneren Mantelrohr bewegt, so dass nur das mit dem Eingriffsteil verbundene erste Deformationselement verformt wird und ein niedrigeres Crashniveau mit geringerer Energieabsorption realisiert wird. Im getrennten Zustand bleibt das mit dem gelösten, vom Eingriffsteil getrennten Verbindungsteil verbundene zweite Deformationselement unverformt, es ist deaktiviert und absorbiert keine Energie.

Die Aktivierung der Koppelvorrichtung ermöglicht bei der Erfindung im Bedarfsfall eine kontrollierte Teilung des Eingriffsteils, wobei mindestens ein Verbindungsteil von dem Eingriffsteil gelöst wird und dadurch wie vorangehend beschrieben das Crashniveau veränderbar ist.

Die erfindungsgemäße Umschaltung der Energieabsorptionsvorrichtung hat den Vorteil, dass die Koppelvorrichtung nicht wie im Stand der Technik unmittelbar mit einem der Deformationselemente zusammenwirkt, sondern das Eingriffsteil über das erste Mitnehmerelement und das Verbindungsteil über das zweite Mitnehmerelement unabhängig vom Zustand der Koppeleinrichtung mit den jeweiligen Deformationselementen verbunden bleiben können. Die Trennung des Verbindungsteils von dem Eingriffselement greift nicht in die Verbindung der Mitnehmerelemente mit den Deformationselementen ein. Dadurch ist die Funktion der Verbindung zwischen den Deformationselementen und dem Eingriffsteil unabhängig von der Funktion der Einkopplung oder Auskopplung einzelner Deformationselemente. Dadurch, dass die Funktionalität der mechanischen Trennung aus dem Kraftfluss im Crashfall unabhängig von der Verbindung der Deformationselemente mit dem Eingriffsteil realisiert wird, können die Deformationselemente mit größerer Gestaltungsfreiheit im Hinblick auf das Energieabsorptionsverhalten optimiert werden.

Die lösbare Verbindung zwischen dem Eingriffsteil und dem Verbindungsteil kann in vorteilhafter Weise unabhängig von der Verbindung zwischen dem Eingriffsteil und den Deformationselementen gestaltet und an die geforderte Funktionalität angepasst werden. Die zwischen dem Eingriffsteil und dem Verbindungsteil zu erwartenden Beanspruchungen können durch konstruktive Maßnahmen abgefangen werden, um sicherzustellen, dass eine sichere Trennung bei Aktivierung der Koppelvorrichtung im Crashfall erfolgt. Dabei kann eine Optimierung im Hinblick auf die Kopplung und Entkopplung von Eingriffs- und Verbindungsteil erfolgen, ohne Kompromisse eingehen zu müssen, die sich beispielsweise aus dem Verformungsverhalten der Deformationselemente ergeben können.

Dadurch, dass die Verbindung der Deformationselemente mit dem Eingriffsteil und dem Verbindungsteil unabhängig ist von der Funktionalität der Umschaltung der Energieabsorptionsvorrichtung, die erfindungsgemäß in die Trennung des Eingriffselement verlagert ist, besteht eine größere Gestaltungsfreiheit bezüglich der Ausbildung und räumlichen Anordnung der Deformationselemente. Dadurch kann eine bessere Anpassung an den zur Verfügung stehenden Bauraum erfolgen, beispielsweise durch Realisierung kleinerer Abmessungen oder vorgegebener Formgebungen.

Das Eingriffsteil und/oder das Verbindungsteil können Formschlusselemente aufweisen, mit denen das Koppelelement zusammenwirkt. Im verbundenen Zustand kann das Koppelelement formschlüssig in die Formschlusselemente eingreifen und dadurch das Verbindungsteil und das Eingriffsteil formschlüssig miteinander koppeln oder verriegeln, so dass im Crashfall über den Formschluss die Kraft in Längsrichtung übertragen wird und das Verbindungsteil gemeinsam mit dem Eingriffsteil relativ zum inneren Mantelrohr bewegt wird. Durch Aktivierung des Aktuators kann das Koppelelement aus den Formschlusselementen heraus bewegt werden, so dass die Formschlussverbindung gelöst wird und dadurch das Verbindungsteil von dem Eingriffsteil getrennt ist.

Die Entkopplung kann dadurch begünstigt werden, dass das Koppelelement und/oder zumindest eines der Formschlusselemente reibungsmindernd ausgestaltet ist. Dabei kann zumindest eine der gegeneinander anliegenden, bei Betätigung des Aktuators aufeinander gleitenden Oberflächen eines Koppel- oder Formschlusselements beispielsweise ganz oder teil-weise mit einer reibungsmindernden Beschichtung versehen sein, oder mit Gleitelementen, die durch Material oder Formgebung die Reibung verringern.

In einer Ausführung der Erfindung können die Formschlusselemente zumindest eine quer zur Längsrichtung verlaufende Formschlussöffnung aufweisen, in der das Koppelelement aufnehmbar ist. Die Formschlussöffnung kann sich beispielsweise in Umfangsrichtung tangential mit radialem Abstand zur Längsachse durch das Eingriffsteil und das Verbindungsteil er-strecken. Darin kann ein im Wesentlichen stiftförmiges Koppelelement zur Herstellung einer formschlüssigen Verbindung aufgenommen sein. Zur Trennung der Verbindung kann das Koppelelement einfach durch Aktivierung des Aktuators aus der Formschlussöffnung her-ausgezogen werden. Durch das in die Formschlussöffnung eingesetzte stiftförmige Kop-pelelement wird eine einfach aufgebaute und wirksame formschlüssige Verriegelung des Verbindungsteils mit dem Eingriffsteil erreicht. Das Entfernen des Koppelelements zum Trennen des Verbindungsteils kann sicher und mit geringem Aufwand bewerkstelligt werden. Dadurch ergibt sich ein funktionssicherer Aufbau, der flexibel und in einem relativ kleinen Bauraum realisierbar ist.

In einer vorteilhaften Weiterbildung kann es vorgesehen sein, dass das Eingriffsteil und/oder das Verbindungsteil als Fließpressbauteil oder als Sinterbauteil ausgebildet ist. Dadurch kann eine einfache und kostengünstige Herstellung erreicht werden.

Es ist weiterhin vorteilhaft, dass der Aktuator als pyroelektrischer Aktuator ausgebildet ist. Der pyroelektrische Aktuator ist zum pyrotechnischen Antrieb des Koppelelements ansteuerbar. Ein pyroelektrischer Aktuator, oft auch als "Pyroswitch" oder "Pyroschalter" bezeichnet, weist eine pyrotechnische Treibladung auf, die durch einen elektrischen Steuerimpuls ge-zündet wird. Die Explosion der Treibladung beschleunigt einen beweglichen Aktuator, der in der vorliegenden Anwendung mit einem Koppelelement verbunden ist. Dadurch kann das Koppelelement bewegt werden zur erfindungsgemäßen Trennung des Verbindungsteils von dem Eingriffsteil, oder auf andere Art eine mechanische Kopplung oder Entkopplung von Eingriffsteil und einem Verbindungsteil bewerkstelligen. Vorteile einer derartigen pyroelektri-schen Koppelvorrichtung sind die extrem schnelle Auslösung im Crashfall sowie die hohe Zuverlässigkeit und Betätigungskraft, welche im Bedarfsfall eine sichere Einkopplung oder Auskopplung eines oder mehrerer Verbindungsteile gewährleistet. Beispielsweise kann das Koppelelement stiftförmig ausgebildet sein, und zur Entkopplung des Verbindungsteils von dem Eingriffsteil aus den Formschlusselementen pyrotechnisch herausgeschossen wird.

Das Eingriffsteil kann über ein Sollbruchelement mit dem einen Mantelrohr verbunden sein. Das Sollbruchelement kann beispielsweise als Losbrechniet, Scherbolzen oder der-gleichen ausgebildet sein, welches beim Überschreiten einer definierten Grenzkraft, der sogenannten Losbrechkraft, die nur im Crashfall in Längsrichtung zwischen äußerer Manteleinheit und Mantelrohr auftritt, bricht und dadurch die relative Bewegung des Eingriffsteils relativ zu dem am Mantelrohr abgestützten Energieabsorptionselementen freigibt. Dadurch ist sichergestellt, dass erst beim Überschreiten der Grenzkraft, also tatsächlich nur im Crashfall eine Krafteinleitung in die Energieabsorptionselemente erfolgt. Dadurch wird die Funktionssicherheit der Energieabsorptionseinrichtung gewährleistet.

Bei einer manuell verstellbaren Lenksäule ist zur Realisierung der vorangehend beschriebenen Ausführung der Erfindung eine Spanneinrichtung vorgesehen, die in Fixierstellung die Mäntel relativ zueinander festlegt und die in Freigabestellung eine teleskopierende Verstellung der Mäntel freigibt, wobei die Spanneinrichtung mindestens ein Arretierteil aufweist, welches sich in Achsrichtung an dem einen, beispielsweise dem äußeren, Mantel abstützt und in Fixierstellung in Achsrichtung unverschiebbar mit dem Eingriffsteil verbunden ist, welches mit dem anderen, beispielsweise dem inneren, Mantel verbunden ist, und in Freigabestellung von dem Eingriffsteil gelöst ist und eine relative Bewegung der Mäntel freigibt. Das Arretierteil wird beim manuellen Betätigen der Spannvorrichtung bewegt, so dass es Freigabestellung vom Eingriffsteil gelöst und in Fixierstellung mit dem Eingriffsteil verbunden ist, und somit das Eingriffsteil mit dem äußeren Mantel wirkverbunden ist, und im Crashfall die Kraft in das Energieabsorptionselement einleitet.

Bei einer motorisch verstellbaren Lenksäule kann vorgesehen sein, dass zwischen den Mänteln ein motorischer Verstellantrieb angeordnet ist, der als Spindeltrieb ausgebildet ist mit einer in eine Spindelmutter eingreifenden Gewindespindel, die relativ zu der Spindelmutter drehend antreibbar ist, wobei sich die Gewindespindel an dem einen Mantel und die Spindelmutter an dem anderen Mantel in Achsrichtung abstützt, und wobei das Energieabsorptionselement zwischen der Spindelmutter und einem Mantel oder zwischen der Gewindespindel und einem Mantel angeordnet ist, wobei die Spindelmutter oder die Gewindespindel in Achsrichtung an dem Eingriffsteil abgestützt ist. In dieser Ausführung ist das Eingriffsteil immer über den Spindeltrieb an dem Mantel, bevorzugt am äußeren Mantel, in Achsrichtung abgestützt. Im Crashfall erfolgt die Kraftübertragung von dem Mantel, an dem der Verstellantrieb abgestützt ist, über die Gewindespindel und die Spindelmutter auf das Eingriffsteil, und von dort auf das Energieabsorptionselement, welches sich an dem anderen Mantel abstützt.

Sowohl bei einer manuell, als auch bei einer motorisch verstellbaren Lenksäule ist ein erfindungsgemäß einstückiges Energieabsorptionselement mit zwei Deformationsabschnitten in Kombination mit einem teilbaren Eingriffsteil im Hinblick auf eine einfache, funktionssichere und kompakte Ausführung vorteilhaft.

Zumindest ein Deformationselement kann über ein Sollbruchelement mit einem Mantel verbunden sein. Das Sollbruchelement bricht oder reißt bei Überschreiten einer definierten Sollbruchkraft in Achsrichtung, die nur im Crashfall erreicht wird, so dass die Relativbewegung des freien Schenkels des Biegeelements zur Verformung in Achsrichtung freigegeben wird. Beispielsweise kann ein Scherstift vorgesehen sein, der quer zur Achse durch einen Koppelabschnitt hindurchgeführt ist, und der im Crashfall abschert und dadurch die Relativbewegung des Koppelabschnitts zur Verformung des Biegeabschnitts freigibt.

Ein Mantel, bevorzugt der den inneren Mantel aufnehmende äußere Mantel, kann relativ zur Trageinheit in Höhenrichtung quer zur Achse verstellbar ausgebildet sein. Dadurch kann eine manuelle oder motorische Höhenverstellung der Lenksäule realisiert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in perspektivischer Darstellung,
- Figur 2: eine Detailansicht des inneren Mantelrohrs der Lenksäule gemäß Figur 1 mit Spanneinrichtung und Energieabsorptionseinrichtung,
- Figur 3: eine Detailansicht der Energieabsorptionsvorrichtung gemäß Figur 2 in teilweise auseinandergezogenem Zustand,
- Figur 4: das Mantelrohr mit der Energieabsorptionseinrichtung gemäß Figur 2 in einer teilweise auseinandergezogenen Darstellung,
- Figur 5: einen Längsschnitt durch die Energieabsorptionseinrichtung der Lenksäule gemäß Figur 1 bis 4 in betriebsbereitem Normalzustand vor einem Crash,
- Figur 6: die Energieabsorptionseinrichtung gemäß Figur 5 nach einem Crash mit niedrigem Crashniveau,
- Figur 7: die Energieabsorptionseinrichtung gemäß Figur 5 nach einem Crash mit hohem Crashniveau,
- Figur 8: eine erfindungsgemäße motorisch verstellbare Lenksäule in perspektivischer Darstellung,
- Figur 9: eine Detailansicht des inneren Mantelrohrs der Lenksäule gemäß Figur 8 mit motorischer Verstelleinrichtung und Energieabsorptionseinrichtung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

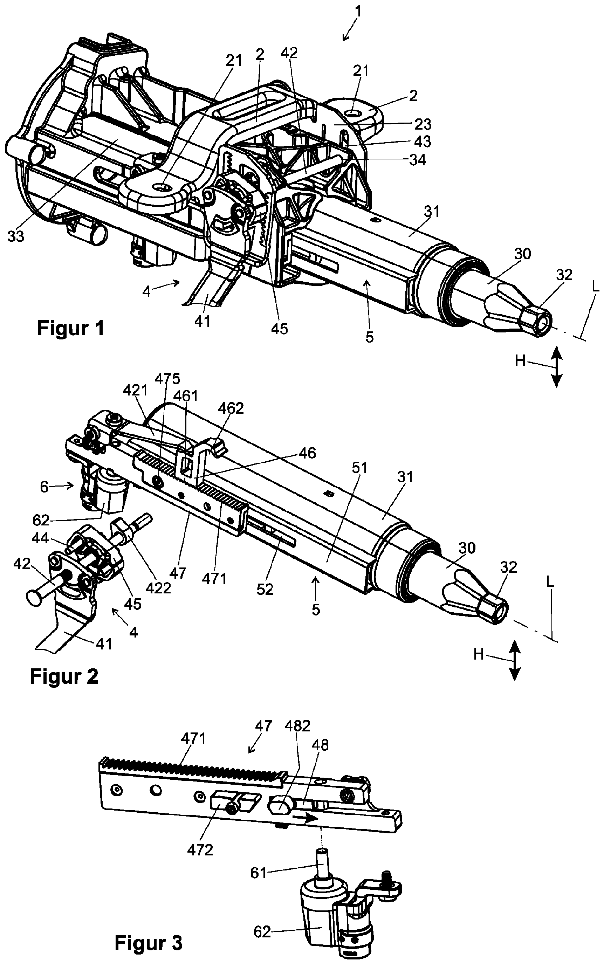

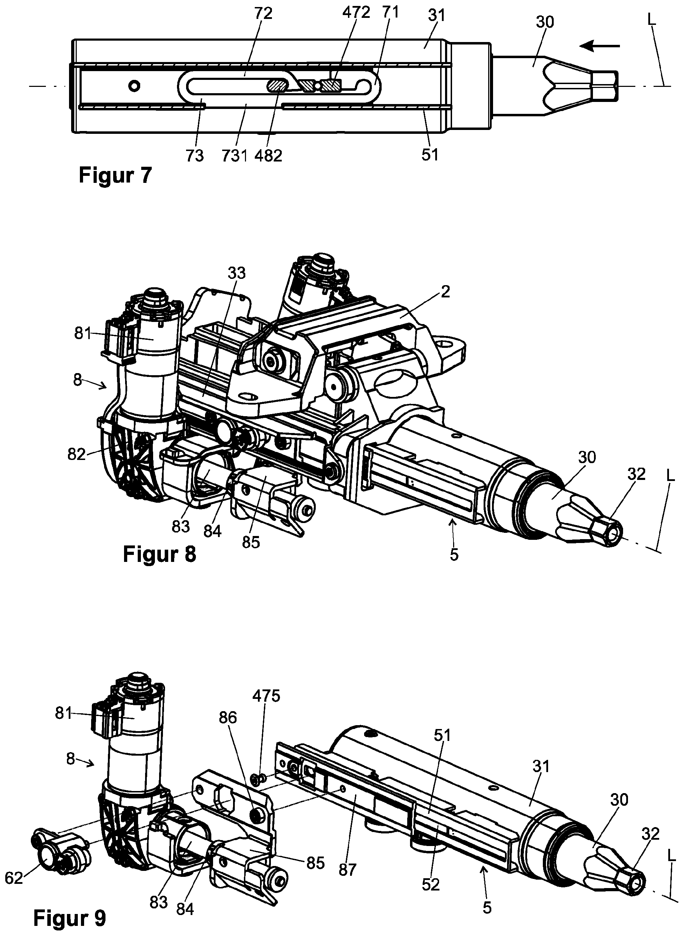

In Figuren 1 und 8 ist jeweils eine erfindungsgemäße Lenksäule 1 schematisch in perspektivischer Ansicht schräg von hinten bezogen auf die Fahrtrichtung eines nicht gezeigten Kraftfahrzeugs dargestellt. Figur 1 zeigt eine manuell verstellbare Ausführungsform und Figur 8 eine motorisch verstellbare Ausführung, wobei für gleichwirkende Bestandteile dieselben Bezugszeichen verwendet werden.

Die Lenksäule 1 kann an der Karosserie eines nicht dargestellten Kraftfahrzeugs mittels einer Konsole 2 befestigt werden, Die Konsole 2 umfasst zur Verbindung mit der Karosserie Befestigungsmittel 21, von denen sich Seitenwangen 22, 23 erstrecken.

Eine Lenkspindel 30 ist um die Achse L - die Längsachse - drehbar in einem inneren Mantelrohr 31 ausgebildeten ersten Mantel, kurz als Mantelrohr 31 bezeichnet, gelagert, wobei auf dem hinteren Ende 32 ein nicht dargestelltes Lenkrad auf der Lenkspindel 30 anbringbar ist. Das innere Mantelrohr 31 ist in einer in Längsrichtung, d.h. in Richtung der Längsachse bzw. in Richtung der Achse L, durchgehenden Aufnahme eines zweiten Mantels in Form einer äußeren Manteleinheit 33, kurz als Manteleinheit 33 bezeichnet, gehaltert.

Eine Spanneinrichtung 4 kann durch manuelle Betätigung eines Spannhebels 41 wahlweise in Fixierstellung (Feststellposition, geschlossener Zustand) oder Freigabestellung (Löse-position, geöffneter Zustand) gebracht werden. Dabei ist in Freigabestellung das innere Mantelrohr 31 zur Längsverstellung in Achsrichtung der Achse L innerhalb der äußeren Mantel-einheit 33 teleskopartig verschiebbar, und die äußere Manteleinheit 33 ist in Höhenrichtung H relativ zur Konsole 2 in den Pfeilrichtungen auf und ab verstellbar. In Fixierstellung ist sowohl das innere Mantelrohr 31 in Längsrichtung als auch die äußere Manteleinheit 33 in Höhenrichtung H fixiert. Die Fixierstellung entspricht dem Normalbetrieb der Lenksäule 1, in dem sichergestellt ist, dass bei den üblicherweise über das Lenkrad auf die Lenkspindel 30 einwirkenden Kräften die eingestellte Lenkradposition nicht verändert wird.

Im Einzelnen umfasst die Spanneinrichtung 4 einen drehfest mit dem Spannhebel 41 verbundenen Spannbolzen 42, welcher quer zur Achse L durch Langlöcher 43 in den einander gegenüberliegenden Seitenwangen 22, 23 hindurchgeführt ist. Über eine an sich bekannte Spannmechanik, die wie in der dargestellten Ausführung drehfest an dem Spannbolzen 42 abgestützte Kippstiftanordnung 44 und eine dieser gegenüberliegende, drehfest an der Seitenwange 22 angeordneten Stützscheibe 45 umfassen kann, wird bei einer Drehung die Stützscheibe 45 relativ zum Spannbolzen 42 axial verlagert und so von außen gegen die Seitenwange 22 angedrückt. Dadurch, dass der Spannbolzen 42 an der gegenüberliegenden Seitenwange 23 axial unverschiebbar gelagert ist, werden die beiden Seitenwangen 22 und 23 gegeneinander bewegt, und die dazwischen angeordnete äußere Manteleinheit 33 kraftschlüssig festgeklemmt. Anstelle der gezeigten Kippstiftanordnung 44, 45 können auch andere Mechanismen zur Umsetzung einer Drehung des Spannbolzens 42 in eine Klemmbewegung zum Einsatz kommen, beispielsweise mit Nockenscheiben oder Wälzkörpern. Alternativ ist es denkbar und möglich, dass die Spanneinrichtung elektro-mechanisch ausgebildet ist, bei der die Überführung von der Freigabestellung in die Fixierstellung und umgekehrt mittels eines Elektromotors erfolgt.

Der Spannbolzen 42 ist durch einander quer zur Achse L gegenüberliegende Öffnungen 34 in der Manteleinheit 33 hindurchgeführt, die ähnlich einer Spannhülse zwischen den Öffnungen 34 in Längsrichtung geschlitzt ausgebildet ist. Dadurch wird bei der beschriebenen Verspannung der Seitenwangen 22, 23 der Konsole 2 durch die Klemmkraft die äußere Manteleinheit 33 quer zur Achse L zusammengedrückt, so dass die Fixierstellung eingestellt ist, wobei das innere Mantelrohr 31 kraftschlüssig in der Manteleinheit 33 festgeklemmt ist.

Die Spanneinrichtung 4 weist ein Arretierteil 46 und ein Eingriffsteil 47 auf. Das Arretierteil 46 ist in Längsrichtung, d.h. in Achsrichtung der Achse L unverschiebbar an der Manteleinheit 33 gelagert. In Höhenrichtung H ist das Arretierteil 46 zur Einstellung der Fixier- und Freigabestellung auf und ab bewegbar gelagert. Das Eingriffsteil 47 ist über eine Energieabsorptionseinrichtung 5 mit dem Mantelrohr 31 verbunden, die weiter unten noch im Detail erläutert wird. Auf ihren quer zur Achse L gegeneinander gerichteten Seiten haben das Arretierteil 46 und das Eingriffsteil 47 korrespondierende, miteinander formschlüssig in Eingriff bringbare Verzahnungen 461 und 471 mit quer zur Längsachse L verlaufenden Zähnen.

In Fixierstellung der Spanneinrichtung 4 wird das Arretierteil 46 von einer an der Manteleinheit 33 abgestützten Feder 421 gegen das Eingriffsteil 47 angepresst, wodurch die Verzahnungen 461 und 471 in formschlüssigem Eingriff gehalten werden. Durch die ineinandergreifenden, quer zur Längsachse L verlaufenden Zähne sind das Arretierteil 46 und das Eingriffsteil 47 in Fixierstellung in Längsrichtung unverschiebbar formschlüssig miteinander verbunden. Dies ist in Figur 2 deutlich erkennbar.

Auf dem Spannbolzen 42 ist ein exzentrischer Nocken 422 angebracht, der mit einer Nockenbahn 462 des Arretierteils 46 zusammenwirkt. Wird der Spannbolzen 42 durch Drehung des Spannhebels 41 im Uhrzeigersinn in die Freigabestellung gebracht, wird der Nocken 422 gegen die Nockenbahn 462 bewegt und hebt das Arretierteil 46 entgegen der Federkraft der Feder 421 an - in den Figuren nach oben - so dass die Verzahnungen 461 und 471 voneinander abgehoben und somit außer Eingriff gebracht werden. In dieser Freigabeposition ist die Klemmung des Mantelrohrs 31 in der Manteleinheit 33 gelöst, so dass das Mantelrohr 31 zur Längsverstellung in Achsrichtung der Längsachse L in der Manteleinheit 33 leicht vor oder zurück bewegt werden kann.

Das Eingriffsteil 47, welches in Figur 3 in einer Ansicht von dem Mantelrohr 31 aus gesehen separat gezeigt ist, weist ein Verbindungsteil 48 auf. Das Eingriffsteil 47 weist ein einen quer zur Achse L gegen das Mantelrohr 31 vorstehenden ersten Mitnehmer 472 auf, der eine erstes Mitnehmerelement bildet, und das Verbindungsteil 48 einen zweiten Mitnehmer 482, der ein ähnlich geformtes zweites Mitnehmerelement bildet mit Abstand in Achsrichtung zum ersten Mitnehmer 472 angeordnet.

Das Eingriffsteil 47 und das Verbindungsteil 48 sind über eine Koppelvorrichtung 6 miteinander verbunden ist, die ein stiftförmiges Koppelelement 61 aufweist, welches mit einem pyroelektrischen Aktuator 62 verbunden ist. In gekoppeltem Zustand sorgt das Koppelelement 61 über eine formschlüssige Verbindung für eine mechanische Kopplung von Eingriffsteil 47 und Verbindungsteil 48 in Achsrichtung. Durch Auslösung des Aktuators 62 wird das Koppelelement 61 aus dem Formschluss herausbewegt, so dass die mechanische Verbindung getrennt wird. Dadurch ist das Verbindungsteil 48 relativ zum Eingriffsteil 47 in Achsrichtung bewegbar, und entsprechend auch der erste Mitnehmer 472 relativ zum zweiten Mitnehmer 482, wie in Figur 3 mit dem Pfeil angedeutet.

Mit anderen Worten sind im gekoppelten Zustand beide Mitnehmer 472 und 482 positionsfest mit dem Eingriffsteil verbunden, und im entkoppelten Zustand ist nur noch der erste Mitnehmer 472 mit dem Eingriffsteil verbunden, wogegen der zweite Mitnehmer 482 in Achsrichtung unverbunden ist.

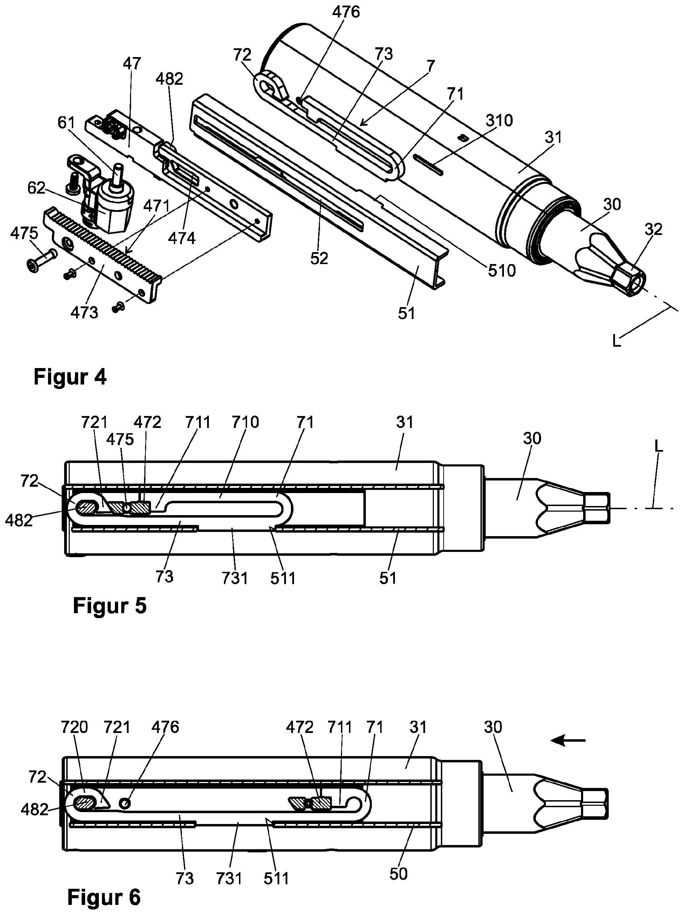

Zwischen dem Eingriffsteil 47 und dem Mantelrohr 31 befindet sich die Energieabsorptionseinrichtung 5, die in Figur 4 in einer Explosionsdarstellung gezeigt ist. Die Energieabsorptionseinrichtung 5 ist an dem inneren Mantelrohr 31 auf der dem Betrachter zugewandten Seite angebracht und weist ein Halteprofil 51 in Form einer C-förmigen Schiene mit im Wesentlichen rechteckigem Querschnitt auf, die fest mit dem inneren Mantelrohr 31 verbunden ist und sich in Längsrichtung erstreckt, wobei der offene Querschnitt gegen die Außenseite des inneren Mantelrohrs 31 gerichtet ist. Mittels Formschlusselementen 510, die in korrespondierende Aufnahmeöffnungen 310 in dem inneren Mantelrohr 31 eingreifen, ist das Halteprofil 51 fest mit dem Mantelrohr 31 beispielsweise mittels Laserschweißen verbunden. Auf diese Weise bildet das als Halteprofil 51 zusammen mit dem inneren Mantelrohr 31 ein langgestrecktes Gehäuse der Energieabsorptionseinrichtung 5 mit im Wesentlichen rechteckigem Innenquerschnitt, welches sich auf einer Seite des Mantelrohrs 31 parallel zur Achse L erstreckt. Auf seiner radial nach außen gerichteten Außenseite weist das als Halteprofil 51 ausgebildete Halteprofil 51 einen sich parallel zur Achse L erstreckenden Schlitz 52 auf.

Außen auf dem Halteprofil 51 ist das Eingriffsteil 47 angebracht, so dass die Mitnehmer 472 und 482 durch den Schlitz 52 in das Innere des Halteprofils 51 hineinragen.

Der erste Mitnehmer 472 ist an einer Zahnplatte 473 ausgebildet, welche die Verzahnung 471 aufweist, und ragt davon ausgehend formschlüssig durch eine Öffnung 474 und steht in der besagten Weise aus dem Eingriffsteil 47 vor. Mittels eines Sollbruchelements in Form eines Scherbolzens 475 ist die Zahnplatte 473 an dem Eingriffsteil 47, und das Eingriffsteil 47 an dem Mantelrohr 31 befestigt. Der Scherbolzen 475 ist durch den ersten Mitnehmer 471 geführt und in eine Befestigungsöffnung 476 in dem Mantelrohr 31 eingesetzt, wie Figuren 4 und 5 entnehmbar ist.

In dem Halteprofil 51 ist ein erfindungsgemäßes Energieabsorptionselement angeordnet, welches als Biegestreifen 7 ausgebildet ist. Figur 5 zeigt in einem Längsschnitt durch das Halteprofil 51 die Einbausituation wie in Figur 2.

Der Biegestreifen 7 ist als einstückiges Stanzteil ausgebildet, bevorzugt aus Stahl, und weist als ersten Deformationsabschnitt einen ersten Biegeabschnitt 71 und erfindungsgemäß als zweiten Deformationsabschnitt einen zweiten Biegeabschnitt 72 auf, die jeweils U-förmig ausgebildet sind und dabei über einen Verbindungsabschnitt 73 derart einstückig miteinander verbunden sind, dass dieser einen gemeinsamen U-Schenkel bildet. Die freien Schenkel 710 und 720 der Biegeabschnitte 71 und 72 befinden sich auf derselben Seite des Verbindungsabschnitts 73, wobei sie mit ihren freien Enden gegeneinander gerichtet sind und sich im Wesentlichen fluchtend zueinander in Achsrichtung erstrecken. Am freien Ende des ersten freien Schenkels 710 ist ein erster Koppelabschnitt 711 in Form eines einstückig angeformten Schubstücks ausgebildet. Am freien Ende des zweiten freien Schenkels 720 ist ein zweiter Koppelabschnitt 721 in Form eines Zughakens ebenfalls einstückig ausgebildet.

Der Verbindungsabschnitt 73 weist einen dritten Koppelabschnitt 731 auf, der als Vorsprung auf der den Biegeabschnitten 71 und 72 abgewandten Seite ausgebildet ist. Der Koppelabschnitt 73 greift formschlüssig in eine korrespondierende Befestigungsöffnung 511 in dem Halteprofil 51 ein. Dadurch ist der Biegestreifen 7 an dem Verbindungsabschnitt 73 in Achsrichtung an dem Mantelrohr 31 formschlüssig fixiert.

Figur 5 zeigt die Situation in normalem Betriebszustand, also vor einem Crash. Es ist erkennbar, wie der erste Mitnehmer 472 in Achsrichtung vorn an dem Koppelabschnitt 711 des ersten Biegeabschnitts 71 angreift und der zweite Mitnehmer 482 hinter den hakenförmigen zweiten Koppelabschnitt 721 des zweiten Biegeabschnitts 72 eingreift.

Im Crashfall wird durch einen aufprallenden Körper ein derart großer Impuls ausgeübt, dass die Haltewirkung der kraftschlüssigen Klemmung überwunden wird und das Mantelrohr 31 in Achsrichtung teleskopierend in Fahrtrichtung in die Manteleinheit 33 eingeschoben wird, wie dies in Figuren 6 und 7 mit dem Pfeil angedeutet ist. Dabei stützt sich das Eingriffsteil 47 über das Arretierteil 46 in Achsrichtung an der äußeren Manteleinheit 33 ab, so dass entsprechend eine Relativbewegung in Achsrichtung zum inneren Mantelrohr 31 auftritt. Durch die Relativbewegung wird der Scherbolzen 475 abgeschert und gibt die Bewegung des Eingriffsteils 47 relativ zum Mantelrohr 31 frei, so dass der Biegestreifen 7 zum Energieabbau deformiert werden kann, wobei der Umfang der energieabsorbierenden Verformung durch den Schaltzustand der Koppelvorrichtung 6 bestimmt wird.

Bei hoher Fahrzeuggeschwindigkeit, und/oder hohem Fahrergewicht, wird ein hohes Crashniveau mit hohem Energieabsorptionsvermögen angestrebt. Dies wird dadurch bewerkstelligt, dass das Eingriffsteil 47 und das Verbindungsteil 48 miteinander verbunden bleiben, und entsprechend der erste Mitnehmer 472 und der zweite Mitnehmer 482 zusammen relativ zum Mantelrohr 31 bewegt werden. In der vorliegenden Ausführung wird dies dadurch erreicht, dass der pyroelektrische Aktuator 62 nicht betätigt wird und inaktiv bleibt, und das Koppelelement 61 das Eingriffsteil 47 und das Verbindungsteil 48 verbindet. Diese Situation nach einem Crash mit hohem Crashniveau ist in Figur 7 dargestellt: Gegenüber dem Ruhezustand in Figur 5 ist der erste Biegeabschnitt 71 von dem ersten Mitnehmer 471 durch Druck auf den freien Schenkel 710 deformiert worden, und der zweite Biegeabschnitt 72 von dem zweiten Mitnehmer 482 durch Zug an dem freien Schenkel 720. Beide Biegeabschnitte 71 und 72 sind deformiert.

Für den Fall, dass ein niedrigeres Crashniveau benötigt wird, beispielsweise bei niedriger Geschwindigkeit und/oder geringerem Fahrergewicht, wird der pyroelektrische Aktuator 62 gezündet, so dass das Koppelement 62 herausgezogen und das Verbindungsteil 48 von dem Eingriffsteil 47 wirkungsmäßig getrennt wird. Dann wird - wie in Figur 6 gezeigt - nur der erste Mitnehmer 471 relativ zum Biegestreifen 7 bewegt, so dass nur dieser erste Biegeabschnitt 71 zur Energieabsorption deformiert wird. Der abgelöste zweite Mitnehmer 482 wird lose mitbewegt und kann keine Kraft auf den zweiten Biegeabschnitt 72 ausüben, so dass dieser unverformt bleibt und keine Energie absorbiert.

Der erfindungsgemäß einstückige Biegestreifen 7 mit den beiden einstückig integrierten Biegeabschnitten 71 und 72 ermöglicht eine besonders leichte und kompakte Bauweise, und ist einfach und kostengünstig in Herstellung und Montage.

In den Figuren 8 und 9 ist eine weitere Ausführung einer Lenksäule dargestellt, welche einen motorischen Verstellantrieb 8 aufweist.

Der Verstellantrieb 8 umfasst einen elektrischen Stellmotor 81, der an der Manteleinheit 33 fixiert ist und über ein Getriebe 82 eine Gewindespindel 83 antreibt, die sich im Wesentlichen parallel zur Achse L erstreckt und zur Bildung eines Spindeltriebs in eine Spindelmutter 84 eingreift. Die Spindelmutter 84 ist drehfest an einem Übertragungselement 85 angebracht, welches mittels eines Verbindungselements 86 mit einem Eingriffsteil 87 verbunden ist. Das Eingriffsteil 87 ist mit dem Halteprofil 51 mittels eines als Niet ausgebildeten Sollbruchelements 475 verbunden, so dass im Crashfall beim Überschreiten einer vorbestimmten Losbrechkraft das Sollbruchelement 475 bricht und die Verbindung zwischen dem Eingriffsteil 87 und dem Halteprofil 51 aufgehoben ist.

Das Eingriffsteil 87 ist bezüglich des funktionalen Zusammenwirkens mit der Energieabsorptionseinrichtung 5 gleichwirkend mit dem oben beschriebenen Eingriffsteil 47 ausgestaltet. Die Energieabsorptionseinrichtung 5 ist ebenfalls funktional gleichwirkend ausgestaltet, und umfasst insbesondere wahlweise einschaltbare Mitnehmer 472 und 482, die wie in den Figuren 5 bis 7 dargestellt mit dem erfindungsgemäßen Biegestreifen 7 zusammenwirken können. Die einzelnen Funktionsteile wie die Koppelvorrichtung 6 können im Wesentlichen identisch realisiert sein und sind nur der Übersichtlichkeit halber in der Zeichnung weggelassen.

Im Crashfall verläuft der Kraftfluss bei der elektrisch verstellbaren Lenksäule 1 gemäß Figur 8 von dem Mantelrohr 31 über den Biegestreifen 7, das Eingriffsteil 87 und den Verstellantrieb 8 zur Manteleinheit 33. Bei der manuell verstellbaren Lenksäule 1 gemäß Figuren 1 bis 4 wird die Kraft vom Eingriffsteil 47 über das Arretierteil 46 auf die Manteleinheit 33 übertragen. Die Funktion der erfindungsgemäß ausgestalteten Energieabsorptionseinrichtung 5 ist analog.

### Bezugszeichenliste

- 1: Lenksäule
- 2: Konsole
- 21: Befestigungsmittel
- 22, 23: Seitenwangen
- 30: Lenkspindel
- 31: (inneres) Mantelrohr
- 310: Aufnahmeöffnungen
- 32: Ende
- 33: (äußere) Manteleinheit
- 4: Spanneinrichtung
- 41: Spannhebel
- 42: Spannbolzen
- 421: Feder
- 422: Nocken
- 43: Langloch
- 44: Kippstiftanordnung
- 45: Stützscheibe
- 46: Arretierteil
- 461,471: Verzahnung
- 462: Nockenbahn
- 47: Eingriffsteil
- 472: erster Mitnehmer
- 473: Zahnplatte
- 475: Scherbolzen
- 476: Befestigungsöffnung
- 48: Verbindungsteil
- 482: zweiter Mitnehmer
- 5: Energieabsorptionseinrichtung
- 51: Halteprofil
- 510: Formschlusselemente
- 511: Befestigungsöffnung
- 52: Schlitz
- 6: Koppelvorrichtung
- 61: Koppelelement
- 62: pyroelektrischer Aktuator
- 7: Biegestreifen
- 71, 72: Biegeabschnitte
- 710, 720: freie Schenkel
- 711, 721: Koppelabschnitte
- 73: Verbindungsabschnitt
- 731: Koppelabschnitt
- 8: Verstellantrieb
- 81: Stellmotor
- 82: Getriebe
- 83: Gewindespindel
- 84: Spindelmutter
- 85: Übertragungselement
- 86: Verbindungselement
- 87: Eingriffsteil

- L: Achse (Längsachse)
- H: Höhenrichtung

## Patentansprüche

1. Lenksäule (1) für ein Kraftfahrzeug, umfassend einen ersten Mantel (31), in dem eine Lenkspindel (30) um eine Achse (L) drehbar gelagert ist, wobei der erste Mantel (31) und ein zweiter Mantel (33) in Richtung der Achse (L) ineinander teleskopierbar angeordnet sind, wobei der zweite Mantel (33) mit einer Karosserie des Kraftfahrzeugs verbindbar ist, wobei die Mäntel (31, 33) über eine Energieabsorptionseinrichtung (5) miteinander gekoppelt sind, die zumindest zwei in Richtung der Achse (L) hintereinander angeordnete Deformationsabschnitte (71, 72) und eine Koppelvorrichtung (6) aufweist, wobei über die Koppelvorrichtung (6) zumindest einer der Deformationsabschnitte (71, 72) zwischen den Mänteln (31, 33) einkoppelbar oder auskoppelbar ist, welcher in eingekoppeltem Zustand bei einer relativen Verschiebung des ersten Mantels (31) gegenüber dem zweiten Mantel (33) plastisch verformbar ist, wobei mindestens zwei Deformationsabschnitte (71, 72) an einem einstückigen Energieabsorptionselement (7) ausgebildet sind, wobei die Koppelvorrichtung (6) zumindest einen Aktuator (62) aufweist mit einem bewegbaren Koppelelement (61), welches in Wirkeingriff bringbar ist zur Ein- oder Auskopplung eines Deformationsabschnitts (720) zwischen den Mänteln (31, 33), **dadurch gekennzeichnet, dass** die Koppelvorrichtung (6) mit einem Eingriffsteil (47) zusammenwirkt, das ein erstes Mitnehmerelement (472) aufweist, welches mit dem ersten Deformationselement (71) in Wirkeingriff bringbar ist, wobei das Eingriffsteil (47) mindestens ein Verbindungsteil (48) aufweist, das ein zweites Mitnehmerelement (482) aufweist, welches mit dem zweiten Deformationselement (72) in Wirkeingriff bringbar ist, wobei das Eingriffsteil (47) und das Verbindungsteil (48) über die Koppelvorrichtung (6) voneinander trennbar verbunden sind.

2. Lenksäule nach Anspruch 1, **dadurch gekennzeichnet, dass** die Deformationsabschnitte (71, 72) einstückig über einen in Richtung der Achse (L) langgestreckten Verbindungsabschnitt (73) miteinander verbunden sind, wobei der Verbindungsabschnitt (73) ein Befestigungsmittel (731) aufweist.

3. Lenksäule nach einem der vorangehenden Ansprüche, **dadurch gekennzeichnet, dass** ein Deformationsabschnitt (71, 72) jeweils einen Koppelabschnitt (711, 721) aufweist zur Verbindung mit dem ersten Mantel (31).

4. Lenksäule nach einem der vorangehenden Ansprüche, **dadurch gekennzeichnet, dass** das Energieabsorptionselement (7) als in Richtung der Achse (L) langgestreckter Biegestreifen (7) ausgebildet ist, der einen Verbindungsabschnitt (73) aufweist, an dessen in Richtung der Achse (L) entgegengesetzten Endbereichen zwei U-förmige Biegeabschnitte (71, 72) ausgebildet sind, bei denen jeweils ein freier Schenkel (710, 720) über eine Umbiegung mit dem Verbindungsabschnitt (73) verbunden ist.

5. Lenksäule nach Anspruch 4, **dadurch gekennzeichnet, dass** in dem Bereich des freien Endes eines freien Schenkels (71, 72) ein Koppelabschnitt (711, 721) ausgebildet ist.

6. Lenksäule (1) nach nach einem der vorangehenden Ansprüche, **dadurch gekennzeichnet, dass** eine Spanneinrichtung (4) vorgesehen ist, die in Fixierstellung die Mäntel (31, 33) relativ zueinander festlegt und die in Freigabestellung eine teleskopierende Verstellung der Mäntel (31, 33) freigibt, wobei die Spanneinrichtung (4) mindestens ein Arretierteil (46) aufweist, welches sich in Richtung der Achse (L) an dem einen Mantel (33) abstützt und in Fixierstellung in Richtung der Achse (L) unverschiebbar mit dem Eingriffsteil (47) verbunden ist, welches mit dem anderen Mantel (31) verbunden ist, und in Freigabestellung von dem Eingriffsteil (47) gelöst ist und eine relative Bewegung der Mäntel (31, 33) freigibt.

7. Lenksäule nach einem der vorangehenden Ansprüche, **dadurch gekennzeichnet, dass** zwischen demersten Mantel (31) und dem zweiten Mantel (33) ein motorischer Verstellantrieb (8) angeordnet ist, der als Spindeltrieb ausgebildet ist mit einer in eine Spindelmutter (84) eingreifenden Gewindespindel (83), die relativ zu der Spindelmutter (84) drehend antreibbar ist, wobei sich die Gewindespindel (83) an dem einen Mantel (33) und die Spindelmutter (84) an dem anderen Mantel (31) in Richtung der Achse (L) abstützt, und wobei das Energieabsorptionselement (7) zwischen der Spindelmutter (84) und einem Mantel (31) oder zwischen der Gewindespindel (83) und einem Mantel (33) angeordnet ist, wobei die Spindelmutter (84) oder die Gewindespindel (83) in Richtung der Achse (L) an dem Eingriffsteil (47) abgestützt ist.

8. Lenksäule nach einem der vorangehenden Ansprüche, **dadurch gekennzeichnet, dass** zumindest ein Deformationselement (71, 72) über ein Sollbruchelement (475) mit einem Mantel (31) verbunden ist.

## Claims

1. A steering column (1) for a motor vehicle, comprising a first casing (31) in which a steering spindle (30) is rotatably mounted about an axis (L), wherein the first casing (31) and a second casing (33) are arranged in such a way that they can be telescoped one into the other in the direction of the axis (L), wherein the second casing (33) can be connected to a body of the motor vehicle, wherein the casings (31, 33) are coupled to one another via an energy absorption device (5) which has at least two deformation sections (71, 72) arranged one behind the other in the direction of the axis (L), and a coupling device (6), wherein at least one of the deformation sections (71, 72) can be coupled between the casings (31, 33) via the coupling device (6) or decoupled therefrom, which deformation section (71, 72) can be plastically deformed in the coupled state in the event of relative displacement of the first casing (31) with respect to the second casing (33), wherein at least two deformation sections (71, 72) are formed on a single-piece energy absorption element (7), wherein the coupling device (6) has at least one actuator (62) with a movable coupling element (61) which can be operably engaged for the coupling or decoupling of a deformation section (720) between the casings (31, 33), **characterized in that** the coupling device (6) interacts with an engagement part (47) which has a first driver element (472) which can be operably engaged with the first deformation element (71), wherein the engagement part (47) has at least one connecting part (48) which has a second driver element (482) which can be operably engaged with the second deformation element (72), wherein the engagement part (47) and the connecting part (48) are connected via the coupling device (6) in such a way that they can be separated from one another.

2. The steering column as claimed in claim 1, **characterized in that** the deformation sections (71, 72) are connected to one another in one piece via a connecting section (73) which is elongated in the direction of the axis (L), wherein the connecting section (73) has a fastening means (731).

3. The steering column as claimed in one of the preceding claims, **characterized in that** a deformation section (71, 72) has in each case one coupling section (711, 721) for connecting to the first casing (31).

4. The steering column as claimed in one of the preceding claims, **characterized in that** the energy absorption element (7) is embodied as an bending strip (7) which is elongated in the direction of the axis (L) and has a connecting section (73), at whose end regions, opposite in the direction of the axis (L), two U-shaped bending sections (71, 72) are formed, at each of which sections a free limb (710, 720) is connected to the connecting section (73) via a bent-over portion.

5. The steering column as claimed in claim 4, **characterized in that** a coupling section (711, 721) is formed in the region of the free end of a free limb (71, 72).

6. The steering column (1) as claimed in one of the preceding claims, **characterized in that** a clamping apparatus (4) is provided which in the locked position secures the casings (31, 33) relative to one another and which in the release position releases a telescopic adjustment of the casings (31, 33), wherein the clamping apparatus (4) has at least one locking part (46) which is supported on the one casing (33) in the direction of the axis (L), and in the locked position is connected to the engagement part (47) so as to be non-displaceable in the direction of the axis (L), which locking part (46) is connected to the other casing (31), and in the release position is disconnected from the engagement part (47) and releases a relative movement of the casings (31, 33).

7. The steering column as claimed in one of the preceding claims, **characterized in that** at a motor-operated adjustment drive (8) is arranged between the first casing (31) and the second casing (33) and is embodied as a spindle drive with a threaded spindle (83) which engages in a spindle nut (84) and can be driven in rotation relative to the spindle nut (84), wherein the threaded spindle (83) is supported on the one casing (33), and the spindle nut (84) is supported on the other casing (31) in the direction of the axis (L), and wherein the energy absorption element (7) is arranged between the spindle nut (84) and one casing (31) or between the threaded spindle (83) and one casing (33), wherein the spindle nut (84) or the threaded spindle (83) is supported on the engagement part (47) in the direction of the axis (L).

8. The steering column as claimed in one of the preceding claims, **characterized in that** at least one deformation element (71, 72) is connected to a casing (31) via a predetermined break element (475).

## Revendications

1. Colonne de direction (1) pour un véhicule automobile, comprenant une première gaine (31) dans laquelle un arbre de direction (30) est monté rotatif autour d'un axe (L), la première gaine (31) et une deuxième gaine (33) étant disposées de manière télescopable l'une dans l'autre en direction de l'axe (L), la deuxième gaine (33) pouvant être raccordée à une carrosserie du véhicule automobile, les gaines (31, 33) étant couplées l'une à l'autre par un dispositif d'absorption d'énergie (5) présentant au moins deux sections de déformation (71, 72) disposées l'une après l'autre en direction de l'axe (L) et un dispositif de couplage (6), le dispositif de couplage (6) permettant de coupler ou de découpler au moins l'une des sections de déformation (71, 72) entre les gaines (31, 33) et étant déformable plastiquement à l'état couplé en cas de décalage relatif de la première gaine (31) par rapport à la deuxième gaine (33), au moins deux sections de déformation (71, 72) étant réalisées sur un élément d'absorption d'énergie (7) d'une seule pièce, le dispositif de couplage (6) présentant au moins un actionneur (62) doté d'un élément de couplage mobile (61) qui peut être mis en prise fonctionnelle pour coupler ou découpler une section de déformation (720) entre les gaines (31, 33),
**caractérisée en ce que** le dispositif de couplage (6) coopère avec une partie de mise en prise (47) qui présente un premier élément entraîneur (472) qui peut être mis en prise fonctionnelle avec le premier élément de déformation (71), la partie de mise en prise (47) présentant au moins une partie de raccordement (48) qui présente un deuxième élément entraîneur (482) qui peut être mis en prise fonctionnelle avec le deuxième élément de déformation (72), la partie de mise en prise (47) et la partie de raccordement (48) étant raccordées de manière amovible l'une de l'autre par le dispositif de couplage (6).

2. Colonne de direction selon la revendication 1, **caractérisée en ce que** les sections de déformation (71, 72) sont raccordées l'une à l'autre d'une seule pièce par une section de raccordement (73) allongée en direction de l'axe (L), la section de raccordement (73) présentant un moyen de fixation (731).

3. Colonne de direction selon l'une quelconque des revendications précédentes, **caractérisée en ce qu'**une section de déformation (71, 72) présente respectivement une section de couplage (711, 721) pour le raccordement à la première gaine (31).

4. Colonne de direction selon l'une quelconque des revendications précédentes, **caractérisée en ce que** l'élément d'absorption d'énergie (7) est réalisé sous la forme d'une bande flexible (7) allongée qui présente une section de raccordement (73) aux zones d'extrémité de laquelle, opposées en direction de l'axe (L), sont réalisées deux sections flexibles en forme de U (71, 72) au niveau desquelles respectivement une branche libre (710, 720) est raccordée à la section de liaison (73) par un cintrage.

5. Colonne de direction selon la revendication 4, **caractérisée en ce qu'**une section de couplage (711, 721) est réalisée au niveau de l'extrémité libre d'une branche libre (71, 72).

6. Colonne de direction (1) selon l'une quelconque des revendications précédentes, **caractérisée en ce qu'**un dispositif de serrage (4) est prévu qui immobilise dans la position de fixation les gaines (31, 33) l'une par rapport à l'autre et qui libère dans la position de libération un réglage télescopique des gaines (31, 33), le dispositif de serrage (4) présentant au moins une partie d'arrêt (46) qui prend appui en direction de l'axe (L) sur ladite une gaine (33) et, dans la position de fixation, est raccordée en direction de l'axe (L) de manière immobile à la partie de mise en prise (47) qui est raccordée à l'autre gaine (31), et qui, dans la position de libération, est détachée de la partie de mise en prise (47) et libère un mouvement relatif des gaines (31, 33).

7. Colonne de direction selon l'une quelconque des revendications précédentes, **caractérisée en ce qu'**entre la première gaine (31) et la deuxième gaine (33), un entraînement de réglage motorisé (8) est disposé qui est réalisé sous la forme d'un entraînement à broche doté d'une broche filetée (83) venant en prise avec un écrou à broche (84) et qui peut être entraîné en rotation par rapport à l'écrou à broche (84), la broche filetée (83) prenant appui sur ladite une gaine (33) et l'écrou à broche (84) prenant appui sur l'autre gaine (31) en direction de l'axe (L), et l'élément d'absorption d'énergie (7) étant disposé entre l'écrou à broche (84) et une gaine (31) ou entre la broche filetée (83) et une gaine (33), l'écrou à broche (84) ou la broche filetée (83) prenant appui en direction de l'axe (L) sur la partie de mise en prise (47).

8. Colonne de direction selon l'une quelconque des revendications précédentes, **caractérisée en ce qu'**au moins un élément de déformation (71, 72) est raccordé à une gaine (31) par un élément destiné à la rupture (475) .
